# EUROPEAN PATENT APPLICATION

(11) **EP 1 942 017 A1**
(43) Date of publication of application: **09.07.2008**
(21) Application number: 06812146.6
(22) Date of filing: 23.10.2006
(51) Int. Cl.: B60C 19/12

(54) **PNEUMATIC TIRE**

(30) Priority: 24.10.2005 JP 2005308475
(71) Applicant: The Yokohama Rubber Co., Ltd., Minato-ku Tokyo 105-8685 (JP); HONDA MOTOR CO., LTD., Tokyo 107-8556 (JP)
(72) Inventor: SEKIGUCHI, Takumi, Hiratsuka-shi Kanagawa 254-8601 (JP); KANEKURO, Masahito, Wako-shi Saitama 351-0193 (JP); MIZONE, Tetsuya, Wako-shi Saitama 351-0193 (JP)
(74) Representative: HOFFMANN EITLE
(86) International application number: PCT/JP2006/321086
(87) International publication number: WO 2007/049570

(57) **Abstract**

This invention provides a pneumatic tire (T) including: a tacky sealant layer (5) formed of a rubber component decomposable by a peroxide, and disposed on the inner side of an inner liner (4) in a region corresponding to a tread part (1); and a cover rubber layer (6) covering the inner side of the tacky sealant layer (5). A sheet piece (7) is disposed to traverse an adhesive seal part (Q) and/or (P) at an edge portion of the cover rubber layer (6), while at least one surface of the sheet piece (7) is a release face which can be separated from at least one of the tacky sealant layer (5) and the cover rubber layer (6). A first end of the sheet piece (7) is inserted between the tacky sealant layer (5) and the cover rubber layer (6) while a second end thereof protrudes to the outer side of the adhesive seal part (Q) and/or (P). According to this configuration, since a decomposition gas generated from the tacky sealant layer at the time of curing is smoothly discharged, it is possible to prevent the uniformity from being deteriorated.

## Description

### TECHNICAL FIELD

The present invention relates to a pneumatic tire. Specifically, the present invention relates to a pneumatic tire in which a tacky sealant layer formed of a rubber component decomposable by a peroxide is disposed on the inner side of the tread portion, the pneumatic tire being capable of preventing deterioration in its uniformity by smoothly removing a decomposition gas generated at the time of curing.

### BACKGROUND ART

In order to secure the safety driving of a vehicle when the tire runs over a nail or the like during the traveling, a rapid reduction in the air pressure due to the puncture has to be avoided. For this purpose, a large number of pneumatic tires have been proposed, in which a tacky sealant layer is disposed on the inner side of the tread portion.

For such a tacky sealant layer, there has been a technique using the characteristic of polyisobutylene rubber that is decomposable by a peroxide (see, for example, Patent Document 1). In this technique, a rubber composition containing polyisobutylene rubber, an inorganic filler, and a peroxide is firstly disposed on the inner side of the tread portion of a green tire. Then, the rubber component in the rubber composition is decomposed by utilizing heat generated at the time of curing the green tire, so that the rubber composition is modified into a tacky sealant layer having viscous fluidity.

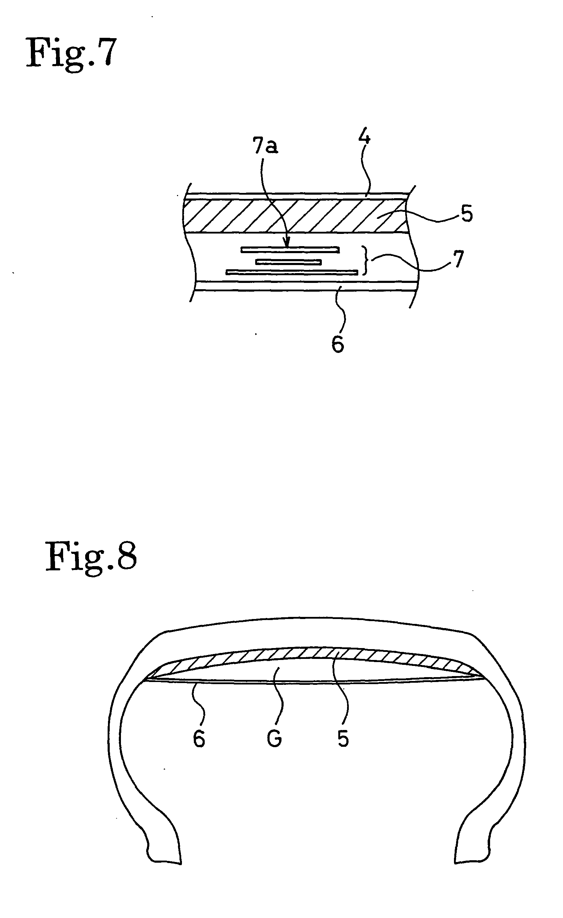

However, troubles may occur due to a tacky sealant layer obtained by decomposing the rubber component by the peroxide as described above. In a state where the tacky sealant layer is exposed to the outside, a deflected flow may occur therein during storage, and also the tacky sealant layer makes it difficult to mount the tire on a rim. For the purpose of avoiding these troubles, the surface of the tacky sealant layer is usually covered with a cover rubber layer. However, when the rubber component is decomposed, a large amount of decomposition gas is generated, thus leading to the following problem. Specifically, the generated decomposition gas is, as shown in Fig. 8, filled in a space between the tacky sealant layer 5 and the cover rubber layer 6. If the tire runs in this state, the sealant of the tacky sealant layer 5 flows non-uniformly. As a result, the tacky sealant layer 5 is unevenly distributed, and the uniformity of the tire is eventually deteriorated. In this respect, the following countermeasures to this problem have been proposed. Specifically, a material with excellent gas permeability is used for the cover rubber layer 6. Alternatively, a twisted yarn for allowing the decomposition gas G to be discharged is disposed between the tacky sealant layer 5 and the cover rubber layer 6, and one end of the twisted yarn is extended from the edge portion of the cover rubber layer (see, for example, Patent Document 2).

However, when any of these proposals is employed, it takes a long time for the decomposition gas to be completely discharged. In the meantime, uneven distribution of the tacky sealant layer occurs due to non-uniform flow of the sealant. In addition, since the cover rubber layer is stretched by the gas pressure, wrinkles remain in the cover rubber layer after the decomposition gas is completely discharged. Accordingly, these proposals cannot completely eliminate factors of deteriorating the uniformity, and thus are not adequate countermeasures.
Patent Document 1: Japanese patent application *Kokai* publication No. Sho 53-55802
Patent Document 2: Japanese patent application *Kokai* publication No. 2004-322811

### DISCLOSURE OF THE INVENTION

An object of the present invention is to solve the above-described problems associated with the conventional techniques. Specifically, the present invention provides a pneumatic tire capable of smoothly discharging a decomposition gas generated from a tacky sealant layer at the time of curing so as to prevent the uniformity from being deteriorated.

The present invention for achieving the above-described object provides a pneumatic tire having the following characteristics. In the pneumatic tire, a tacky sealant layer formed of a rubber component decomposable by a peroxide is disposed on the inner side of an inner liner in a region corresponding to a tread part, and also in which the tacky sealant layer is covered with a cover rubber layer. In addition, in the pneumatic tire, a sheet piece is disposed to traverse a part of an adhesion seal part at an edge portion of the cover rubber layer. The sheet piece is inserted, at a first end thereof, between the tacky sealant layer and the cover rubber layer on the inner side of the adhesive seal part, and also protrudes, at a second end thereof, to the outer side of the adhesive seal part. Concurrently, at least one surface of the sheet piece is formed to be a release face which can be separated from at least one of the tacky sealant layer and the cover rubber layer.

According to the present invention, the sheet piece is disposed in the adhesive seal part at the edge portion of the cover rubber layer covering the tacky sealant layer so as to traverse a part of the adhesive seal part. Concurrently, the sheet piece has at least one surface as the release face that can be separated from at least one of the tacky sealant layer and the cover rubber layer. Accordingly, a decomposition gas generated on the inner side of the cover rubber layer at the time of curing is discharged to the outside via the release face of the sheet piece. This makes it possible to promptly discharge the decomposition gas without causing the cover rubber layer to be expanded and deformed by the gas pressure of the decompression gas. As a result, since non-uniform flow of the tacky sealant layer can be suppressed, the uniformity of the tire is not deteriorated. Moreover, since the uneven distribution of the tacky sealant layer is eliminated, it is possible to secure an excellent sealing effect at the time of puncture.

### BRIEF DESCRIPTION OF THE DRAWING

[Fig. 1] Fig. 1 is a half sectional view, taken along the meridional direction, and showing an example of a pneumatic tire according to the present invention.
[Fig. 2] Part (a) and (b) of Figs. 2 are plan views seen from the inner side of the tire, and each showing a part of a cover rubber layer in the tire shown in Fig. 1.
[Fig. 3] Fig. 3 is a partial sectional view schematically showing the arrangement relationship of a sheet piece in a cross section seen in the direction of the arrows A-A in Part (a) of Fig. 2.
[Fig. 4] Fig. 4 is a partial sectional view schematically showing the arrangement relationship of a sheet piece in a cross section in the direction of the arrows B-B in Part (b) of Fig. 2.
[Fig. 5] Part (a) of Fig. 5 is a partially cross-sectional view schematically showing the arrangement relationship of the sheet piece in a cross section seen in the direction of the arrows C-C in Fig. 2(b), and shows a case where a sheet piece according to another embodiment of the present invention is disposed at a position in the S portion in Part (b) of Fig. 2. Parts (b) and (c) of Fig. 5 are cross-sectional views each illustrating the shape of a folded sheet piece.
[Fig. 6] Part (a) of Fig. 6 is a perspective view showing a sheet piece according to still another embodiment of the present invention, while Part (b) thereof is a plan view illustrating a process of forming the sheet piece shown in Part (a).
[Fig. 7] Fig. 7 is a schematic view corresponding to Part (a) of Fig. 5, and showing a case where a sheet piece according to yet another embodiment of the present invention is disposed. [Fig. 8] Fig. 8 is a cross-sectional view showing an example of a conventional pneumatic tire.

### BEST MODES FOR CARRYING OUT THE INVENTION

Hereinafter, the configuration of the present invention will be described in detail with reference to the accompanying drawings.

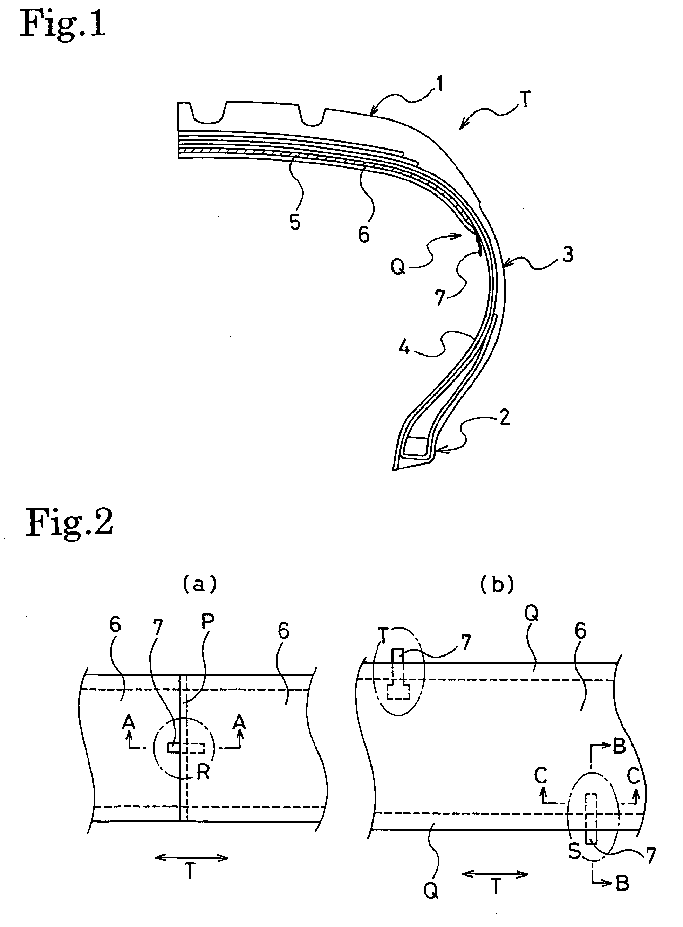

Fig. 1 is a half sectional view showing an example of a pneumatic tire according to an embodiment of the present invention. Parts (a) and (b) of Figs. 2 are plan views seen from the inner side of the tire, and each showing a part of a cover layer disposed on the inner side of a tread part of the tire shown in Fig. 1.

As seen in Fig. 1, a pneumatic tire T includes a tread part 1, a pair of left and right bead parts 2, and sidewall parts 3 each continuously connecting the tread part 1 and a corresponding one of the bead parts 2 to each other. A tacky sealant layer 5 is disposed, on the inner side of an inner liner 4, in a region corresponding to the tread part 1. The tacky sealant layer 5 is formed of a rubber component decomposable by a peroxide. The inner side of the tacky sealant layer 5 is covered with a cover rubber layer 6.

A sheet piece 7 is disposed at an adhesive seal part Q in an edge portion of the cover rubber layer 6 so as to traverse a part of the adhesive seal part Q. The sheet piece 7 has at least one face made to be a release face that can be separated from at least one of the tacky sealant layer 5 and the cover rubber layer 6. One end portion of the sheet piece 7 is inserted between the tacky sealant layer 5 and the cover rubber layer 6 on the inner side of the adhesive seal part Q, while the other end thereof protrudes to the outer side of the adhesive seal part Q.

With this sheet piece 7, a decomposition gas generated on the inner side of the cover rubber layer 6 during curing is discharged to the outside via the release face of the sheet piece 7. This makes it possible to promptly discharge the decomposition gas without causing the cover rubber layer 6 to be expanded and deformed by the gas pressure of the decomposition gas. Accordingly, since a non-uniform flow of the sealant of the tacky sealant layer 5 is suppressed, the uniformity of the tire is not deteriorated. Moreover, since uneven distribution of the tacky sealant layer 5 is eliminated, it is possible to secure an excellent sealing effect when the tire is punctured.

Fig. 1 shows the case where the sheet piece 7 is disposed to traverse a part of the adhesive seal part Q, which is the joint portion of the cover rubber layer 6 to the inner liner 4 (not illustrated) in the edge portion, in the tire width direction, of the cover rubber layer 6, as indicated by the S or T portion in Part (b) of Fig. 2. However, the above-described sheet piece 7 may be disposed, as indicated by the R portion in Part (a) of Fig. 2, to traverse a part of an adhesive seal part P that is an overlapping joint portion (spliced portion), in the tire circumferential direction T, of the two end portions of the cover rubber layer 6.

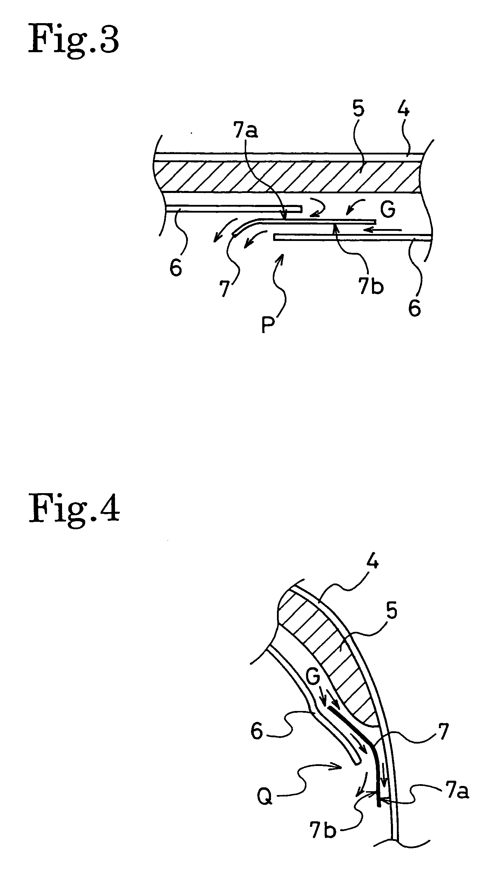

Fig. 3 schematically shows the arrangement relationship of the sheet piece 7 in a cross section seen in the direction of the arrows A-A in Part (a) of Fig. 2. Suppose the case where the sheet piece 7 is disposed to traverse the adhesive seal part P of the cover rubber layer 6 as shown in the figures. In this case, the decomposition gas G generated from the tacky sealant layer 5 is discharged in the direction of the arrow, along a surface 7a on the tacky sealant layer 5 side and a surface 7b on the cover rubber layer 6 side, of the sheet piece 7. In other words, since at least one of the surface 7a and the surface 7b is made to be a release face that can be separated from the tacky sealant layer 5 and the cover rubber layer 6, the decomposition gas G is smoothly discharged. However, the following problem may occur depending on the amount of the decomposition gas G generated from the tacky sealant layer 5 or the viscosity of the tacky sealant layer 5. Specifically, the material of the tacky sealant layer 5 may sometimes flow into a space between the cover rubber layer 6 and the surface 7b to obstruct the discharge of the decomposition gas G. Accordingly, it is preferable that the surface 7a, on the tacky sealant layer 5 side, of the sheet piece 7 be made to be the release face that can be separated from the tacky sealant layer 5.

Fig. 4 schematically shows the arrangement relationship of the sheet piece 7 in a cross section seen in the direction of the arrows B-B in Fig. 2(b). Suppose the case where the sheet piece 7 is disposed to traverse a part of the adhesive seal part Q of the cover rubber layer 6 as shown in the figures. In this case, the decomposition gas G generated from the tacky sealant layer 5 is discharged in the direction of the arrow, along the surface 7a on the tacky sealant layer 5 side and the surface 7b on the cover rubber layer 6 side, of the sheet piece 7. Even in this case, since at least one of the surface 7a and the surface 7b is made to be a release face that can be separated from the tacky sealant layer 5 and the cover rubber layer 6, the decomposition gas G is smoothly discharged. However, in the same manner as the case of Fig. 3, the following problem may occur depending on the amount of the decomposition gas G generated from the tacky sealant layer 5 or the viscosity of the tacky sealant layer 5. Specifically, the material of the tacky sealant layer 5 may sometimes flow into a space between the cover rubber layer 6 and the surface 7b to obstruct the discharge of the decomposition gas G. Accordingly, it is preferable that the surface 7a, on the tacky sealant layer 5 side, of the sheet piece 7 be made to be the release face that can be separated from the tacky sealant layer 5.

Disposing the sheet piece 7 as described above allows the decomposition gas G generated from the tacky sealant layer 5 at the curing process to be discharged from the inside of the tire immediately after the curing process to the tire inner surface side along the release face of the sheet piece 7. Accordingly, it is possible to promptly discharge the decomposition gas G without causing expansion and deformation of the cover rubber layer 6, and to thus suppress the non-uniform flow of the sealant of the tacky sealant layer 5. As a result, the uniformity of the tire is not deteriorated. Moreover, since uneven distribution of the tacky sealant layer 5 is eliminated, it is possible to secure an excellent sealing effect when the tire is punctured.

The decomposition gas G generated from the tacky sealant layer 5 is automatically discharged from the tire immediately after the curing process. It should be noted that, however, the decomposition gas G is sometimes difficult to be discharged due to a decrease in the gas pressure associated with a decrease in the amount of the residual gas G. For this reason, the following methods may be employed in order to accelerate the discharge of the residual gas G. Specifically, it is possible to promptly discharge the residual gas G by reducing the pressure on the tire inner surface side, by sucking the gas at the vicinity of the sheet piece 7, or by pressing the cover rubber layer 6 from the tire inner surface side.

As described above, the following problem may occur depending on the amount of the gas G generated from the tacky sealant layer 5 or the viscosity of the tacky sealant layer 5. Specifically, the material of the tacky sealant layer 5 may flow into a space between the cover rubber layer 6 and the surface 7b, on the tacky sealant layer 5 side, of the sheet piece 7, in association with the discharge of the gas G. As a result, the discharge of the gas G may be prevented. For this reason, it is preferable that the surface 7a, on the tacky sealant layer 5 side, of the sheet piece 7 be made to be a release face that can be separated from the tacky sealant layer 5. Note that, in the present invention, the width of the sheet constituting the sheet piece 7 may be set within a range approximately from 8 mm to 15 mm in order to smoothly discharge the gas G.

In the present invention, although not particularly limited, the material constituting the sheet piece 7 is preferably a rubber, a resin, or a composition of the rubber and the resin. The shape of the sheet piece 7 may be any of a single-layer sheet and a laminated sheet, while at least one face of the sheet piece 7 may be formed of a removable material. As such a removable material, a silicone resin or a fluororesin may be used. Alternatively, the sheet piece 7 may be prepared in the following manner. As the material constituting the sheet piece 7, a resin material other than such a removable material as a silicone resin and a fluororesin is used. Then, a surface treatment using a release agent or the like is applied to at least one face of the resin material. As such a release agent, preferably used is a silicone release agent or a fluorine release agent.

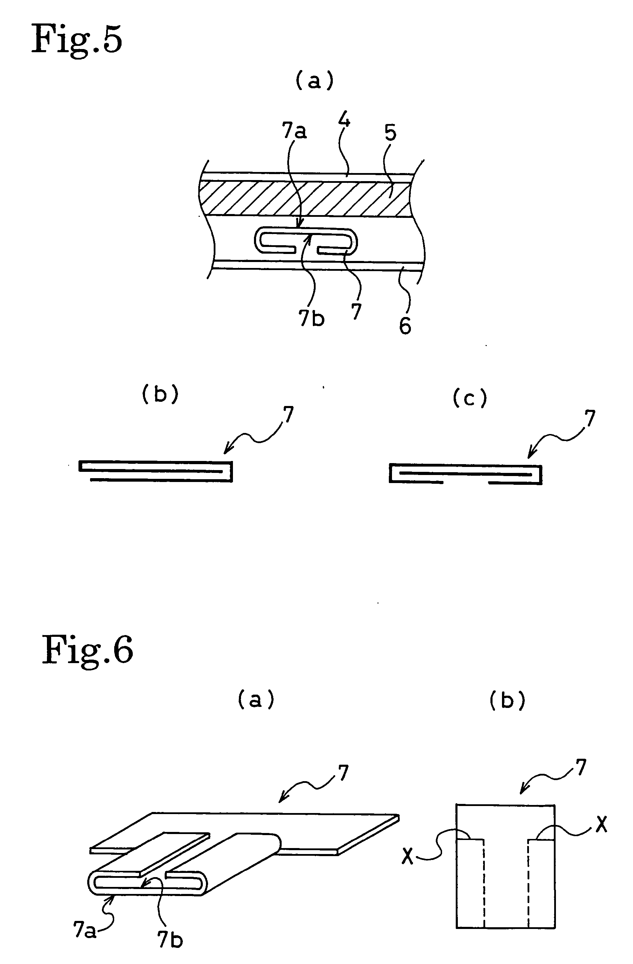

Part (a) of Fig. 5 is a schematic view in a cross section seen in the direction of the arrows C-C in Part (b) of Fig. 2, and shows a case where a sheet piece 7 according to another embodiment of the present invention is disposed at a position in the S portion in Part (b) of Fig. 2. In this embodiment, the sheet piece 7 is folded, so that part of the release face of the sheet piece 7 faces another part of the release face. Then, the sheet piece 7 is arranged, so that the folded surface 7b communicates to both of the inner and outer sides of the adhesive seal part Q, and also that the surface, on the side to which the sheet piece 7 is folded, of the sheet piece 7 faces the cover rubber layer 6. This configuration makes it difficult for the sealant of the tacky sealant layer 5 to flow into the surface 7b side on the inner side of the folded parts. Accordingly, the decomposition gas G generated from the tacky sealant layer 5 is likely to flow through the space on the surface 7b of the folded parts. It should be noted that, when the sheet piece 7 is folded as described above, the form of the folded sheet piece 7 may be one illustrated in Part (b) or (c) of Fig. 5. Part (c) of Fig. 5 illustrates a configuration using two sheet pieces.

Part (a) of Fig. 6 is a perspective view showing another form of a sheet piece 7, according to still another embodiment, used in the present invention. In Part (a) of Fig. 6, the sheet piece 7 is folded on one end side in the longitudinal direction thereof in the same manner as that of the sheet piece 7 shown in Part (a) of Fig. 5. The sheet piece 7 of this embodiment has cuts X each formed in a part of the sheet piece 7 as shown in Part (b) of Fig. 6. Then, a portion, corresponding to each cut X, of the sheet piece 7 is folded to an opposite side along the dashed line in the figure, so that the sheet piece 7 is formed in a T shape as shown in Part (a) of Fig. 6. Then the sheet piece 7 is arranged, so that the folded part of the sheet piece 7 communicates to the inner and outer sides of the adhesive seal part Q, as shown in the T portion in Part (b) of Fig. 2. The same effects as those of the embodiment shown in Fig. 5 can be achieved in this case as well.

Fig. 7 shows a yet another embodiment of a sheet piece 7 used in the present invention. Fig. 7 is a schematic view corresponding to Part (a) of Fig. 5, and showing a case where the sheet piece 7 is disposed to traverse a part of the adhesive seal part Q of the cover rubber layer 6 in Part (b) of Fig. 2. In this embodiment, the sheet piece 7 is disposed by laminating plural layers (three layers in the figure). In the case of this embodiment, the laminated sheets may be formed to have different widths. Moreover, all the surfaces of these sheets may be formed to be release faces except an upper surface 7a of the sheet positioned closest to the tacky sealant layer 5. This configuration makes it possible to more smoothly and more promptly discharge the decomposition gas G.

As the rubber component to be decomposed by the peroxide for the tacky sealant layer 5 in the pneumatic tire of the present invention, used is, for example, polyisobutylene rubber, isobutylene isoprene rubber (IIR), or isoprene rubber. Note that, it is possible to combine, in addition to the peroxide-decomposable rubber component, another rubber component with the rubber composition forming the tacky sealant layer 5 for the purpose of adjusting the viscosity. As this rubber component, it is possible to use, for example, styrene butadiene rubber, butadiene rubber, or natural rubber.

Moreover, as the peroxide, used is, for example, acyl peroxides (for example, benzoyl peroxide, p-chlorobenzoyl peroxide), ketone peroxides (for example, methyl ethyl ketone peroxide), peroxyesters (for example, t-butyl peroxyacetate, t-butyl peroxybenzoate, t-butyl peroxyphthalate), alkyl peroxides (for example, dicumyl peroxide, di-t-butyl peroxybenzoate, 1,3-bis(t-butyl peroxyisopropyl)benzen), hydroperoxides (for example, t-butyl hydroperoxide).

In addition, a catalyst such as cobalt naphthenate may be sometimes added to the rubber composition forming the above-described tacky sealant layer 5 as necessarily for the purpose of accelerating the decomposing of the rubber component with the peroxide. Moreover, an inorganic filler such as carbon black and silica; an adhesive agent such as polybutene; or a plasticizer such as aromatic process oil, naphthenic process oil, and paraffinic process oil is added to the rubber composition in some cases.

As described above, the pneumatic tire of the present invention has the following configuration. The tacky sealant layer formed of the rubber component decomposable by the peroxide is disposed on the inner side of the tread part. Then, the inner side of the tacky sealant layer is covered with the cover rubber layer. Moreover, in this pneumatic tire, at the adhesive seal part in the edge portion of the cover rubber layer, the sheet piece having a removable surface, which can be separated, is disposed to traverse the seal part. The sheet piece also protrudes, at one end thereof, to the tire inner surface side. This configuration makes it possible to smoothly discharge the decomposition gas without causing expansion and deformation of the cover rubber layer. Accordingly, it is possible to prevent the uniformity of the tire from being deteriorated as well as to secure an excellent sealing effect at the time when the tire is punctured. Since providing excellent effects with its simple configuration, the present invention may be applied widely to pneumatic tires provided with a tacky sealant layer formed of a rubber component decomposable by a peroxide.

## Claims

1. A pneumatic tire **characterized by** comprising:
a tacky sealant layer formed of a rubber component decomposable by a peroxide, and disposed on the inner side of an inner liner in a region corresponding to a tread part;
a cover rubber layer covering the tacky sealant layer; and
a sheet piece disposed to traverse a part of an adhesive seal part at a an edge portion of the cover rubber layer,
**characterized in that** one end of the sheet piece is inserted between the tacky sealant layer and the cover rubber layer on the inner side of the adhesive seal part, while the other end thereof protrudes to the outer side of the adhesive seal part, and
that at least one surface of the sheet piece is formed to be a release face which can be separated from at least one of the tacky sealant layer and the cover rubber layer.

2. The pneumatic tire according to claim 1 **characterized in that** the adhesive seal part is an overlapping joint portion, in the tire circumferential direction, of the two end portions of the cover rubber layer.

3. The pneumatic tire according to claim 1 **characterized in that** the adhesive seal part is a joint portion of the cover rubber layer to the inner liner in an edge portion, in the tire width direction, of the cover rubber layer.

4. The pneumatic tire according to any one of claims 1, 2 and 3 **characterized in that** the release face is formed of a removable material.

5. The pneumatic tire according to claim 4 **characterized in that** the removable material is any one of a silicone resin and a fluororesin.

6. The pneumatic tire according to any one of claims 1, 2 and 3 **characterized in that** the removable surface is formed of a resin material to which a surface treatment using a release agent is applied.

7. The pneumatic tire according to claim 6 **characterized in that** the release agent is any one of a silicone-based release agent and a fluorine-based release agent.

8. The pneumatic tire according to any one of claims 1 to 7,
**characterized in that** the sheet piece is folded, so that part of the release face of the sheet piece faces another part of the release face, and
that the folded part of the sheet piece communicates to both of the inner side and the outer side of the adhesive seal part.
